(19) Europäisches Patentamt
European Patent Office
Office européen des brevets

(11) **EP 4 741 772 A1**

(12) **EUROPÄISCHE PATENTANMELDUNG**

(43) Veröffentlichungstag:
   **13.05.2026   Patentblatt 2026/20**

(21) Anmeldenummer: **24211950.1**

(22) Anmeldetag: **11.11.2024**

(51) Internationale Patentklassifikation (IPC):
   **G01D 5/20** (2006.01)   **G01D 5/244** (2006.01)
   **G01D 5/245** (2006.01)

(52) Gemeinsame Patentklassifikation (CPC):
   **G01D 5/2053; G01D 5/24423; G01D 5/2455**

(84) Benannte Vertragsstaaten:
   **AL AT BE BG CH CY CZ DE DK EE ES FI FR GB GR HR HU IE IS IT LI LT LU LV MC ME MK MT NL NO PL PT RO RS SE SI SK SM TR**
   Benannte Erstreckungsstaaten:
   **BA**
   Benannte Validierungsstaaten:
   **GE KH MA MD TN**

(71) Anmelder: **Dr. Johannes Heidenhain GmbH**
   **83301 Traunreut (DE)**

(72) Erfinder:
   • **HEUMANN, Martin**
     **83278 Traunstein (DE)**
   • **HEINEMANN, Christoph**
     **83236 Übersee (DE)**

(54) **SKALENELEMENT FÜR EINE INDUKTIVE WINKELMESSEINRICHTUNG**

(57)   Die Erfindung betrifft ein Skalenelement (2), welches ein Substrat (2.1) aufweist, auf dem eine Teilungsspur (2.2) angeordnet ist. Die Teilungsspur (2.2) ist entlang einer Umfangsrichtung (x) aus einer periodischen Abfolge von alternierend angeordneten elektrisch leitfähigen Teilungsbereichen (2.21) und nichtleitfähigen Teilungsbereichen (2.22) gebildet, wobei die elektrisch leitfähigen Teilungsbereiche (2.21), jeweils aus einer Schicht aus elektrisch leitfähigem Material gebildet sind. Im Substrat (2.1) ist zumindest eine Bohrung (2.11) angeordnet. Die elektrisch leitfähigen Teilungsbereiche (2.21) weisen jeweils eine Öffnung (2.211) auf, wobei das elektrisch leitfähige Material die Öffnung (2.211) umschließt. Zumindest in einem der elektrisch leitfähigen Teilungsbereiche (2.21) ist durch die Öffnung (2.211) hindurch die Bohrung (2.11) im Substrat (2.1) angeordnet. Zudem sind zwei in Umfangsrichtung (x) benachbarte elektrisch leitfähige Teilungsbereiche (2.21) so ausgestaltet, dass entlang der radialen Richtung winkelbezogene Abstände ($\alpha$, $\beta$, $\gamma$) zwischen deren leitfähigen Schichten unterschiedlich groß sind.

Fig. 1

**Beschreibung**

## GEBIET DER TECHNIK

Die Erfindung betrifft ein Skalenelement für eine induktive Winkelmesseinrichtung gemäß dem Anspruch 1 zur Bestimmung einer Winkellage des Skalenelements relativ zu einem Abtastelement.

Induktive Winkelmesseinrichtungen werden beispielsweise zur Bestimmung einer Winkelposition von relativ zueinander drehbaren Maschinenteilen verwendet. Bei induktiven Winkelmesseinrichtungen sind häufig Erregerspuren und Empfängerspuren etwa in Form von Leiterbahnen auf einer gemeinsamen meist mehrlagigen Leiterplatte aufgebracht, die beispielsweise mit einem Stator der Winkelmesseinrichtung fest verbunden ist. Dieser Leiterplatte gegenüber befindet sich ein Skalenelement, auf dem Teilungsstrukturen aufgebracht sind, und welches mit einem beweglichen Teil der Winkelmesseinrichtung fest verbunden ist. Wenn an den Erregerspuren ein zeitlich wechselnder elektrischer Erregerstrom angelegt wird, werden in den Empfängerspuren während der Relativbewegung zwischen dem Skalenelement und dem Abtastelement von der Position abhängige Signale erzeugt. Diese Signale werden dann in einer Auswerteelektronik weiterverarbeitet.

## STAND DER TECHNIK

Aus der EP 4 421 454 A1 der Anmelderin ist ein Skalenelement für eine induktive Winkelmesseinrichtung bekannt. Das dort beschriebene Skalenelement umfasst zwei Teilungsspuren, die jeweils aus einer periodischen Abfolge von alternierend angeordneten elektrisch leitfähigen Teilungsbereichen und nichtleitfähigen Teilungsbereichen bestehen. Befestigt wird das Skalenelement mit Hilfe von Schrauben in Befestigungsbohrungen, die alle innerhalb elektrisch leitfähiger Teilungsstrukturen angeordnet sind.

## ZUSAMMENFASSUNG DER ERFINDUNG

Der Erfindung liegt die Aufgabe zugrunde ein kompaktes und kostengünstig herstellbares Skalenelement zu schaffen, das flexible Befestigungsmöglichkeiten eröffnet und dennoch für eine vergleichsweise genau arbeitende induktive Winkelmesseinrichtung verwendbar ist.

Diese Aufgabe wird erfindungsgemäß durch die Merkmale des Anspruches 1 gelöst.

Das Skalenelement, welches für eine induktive Winkelmesseinrichtung geeignet und bestimmt ist, umfasst ein Substrat, auf dem eine Teilungsspur angeordnet ist. Die Teilungsspur ist entlang einer Messrichtung aus einer periodischen Abfolge von alternierend angeordneten elektrisch leitfähigen Teilungsbereichen und vergleichsweise nichtleitfähigen Teilungsbereichen gebildet, wobei die elektrisch leitfähigen Teilungsbereiche jeweils aus einer Schicht aus elektrisch leitfähigem Material gebildet sind. Die Schicht bzw. die Schichtfläche aus elektrisch leitfähigem Material erstreckt sich einerseits entlang der Umfangsrichtung und andererseits entlang der radialen Richtung. Weiterhin ist im Substrat zumindest eine Bohrung angeordnet und vorgesehen, die dazu geeignet ist, das Skalenelement an einem Maschinenteil zu befestigen. Zumindest ein elektrisch leitfähiger Teilungsbereich weist eine Öffnung auf, wobei das elektrisch leitfähige Material die Öffnung umschließt. Zudem ist zumindest in einem der elektrisch leitfähigen Teilungsbereiche durch die Öffnung hindurch die zumindest eine Bohrung im Substrat angeordnet. Zwei in Umfangsrichtung benachbarte elektrisch leitfähige Teilungsbereiche sind so ausgestaltet, dass entlang der radialen Richtung winkelbezogene Abstände in Umfangsrichtung zwischen den leitfähigen Schichten der elektrisch leitfähigen Teilungsbereiche unterschiedlich groß sind.

Demnach weisen also benachbarte elektrisch leitfähige Teilungsbereiche in unterschiedlichen Distanzen zur Achse unterschiedliche winkelbezogene Abstände (in Umfangsrichtung) auf. Mit anderen Worten: Wenn man einen ersten Abstand radial innen zwischen zwei in Umfangsrichtung gegenüber liegenden Punkten auf der jeweiligen Kontur eines elektrisch leitfähigen Teilungsbereichs misst, so ist an einer radial hierzu versetzten Stelle ein zweiter Abstand unterschiedlich groß im Vergleich zum ersten Abstand. Gegenüber liegende Punkte liegen insbesondere auf ein und derselben virtuellen Kreislinie, deren Mittelpunkt auf der Achse liegt. Die Konturen der betreffenden elektrisch leitfähigen Teilungsbereiche bzw. elektrisch leitfähigen Schichten verlaufen also nicht über ihre gesamte radiale Ausdehnung hinweg gerade in radialer Richtung. Winkelbezogene Abstände zwischen zwei in Umfangsrichtung benachbarten elektrisch leitfähigen Teilungsbereichen beziehen sich auf einen jeweiligen Zentriwinkel um die Achse und werden hier in Grad angegeben.

Insbesondere liegt zwischen zwei in Umfangsrichtung benachbarten elektrisch leitfähigen Teilungsbereichen ein erster Abstand vor und radial versetzt hierzu ein zweiter Abstand. Dabei können der erste Abstand und der zweite Abstand größer sein als ein radial zwischen dem ersten und dem zweiten Abstand liegender dritter Abstand.

Die elektrisch leitfähigen Teilungsbereiche sind also aus einer Schicht aus elektrisch leitfähigem Material gebildet. Die vergleichsweise nichtleitfähigen Teilungsbereiche können etwa aus Kunststoff (z. B. aus Leiterplattenmaterial) gebildet sein. Das Skalenelement kann als Substrat vorzugsweise ein Leiterplattenmaterial aus Kunststoff aufweisen. Alternativ kann das Substrat aus einem Schichtkörper gebildet sein, welcher eine relativ dicke Stahlschicht und eine nichtleitende Schicht (z.B. Kunststoffschicht) umfasst, wobei die Stahlschicht auf der von den Teilungsbereichen abgewandten Seite des Skalenelements angeordnet ist. Der oben genannte Begriff "vergleichsweise nichtleitfähig" bezieht sich also auf das Verhältnis der elektrischen Leitfähigkeiten der Materialien der alternierend angeordneten Teilungsbereiche. Dieses Verhältnis kann insbesondere größer als 10 oder größer als 50 sein. Die Schicht aus elektrisch leitfähigem Material der elektrisch leitfähigen Teilungsbereiche ist mit Vorteil größer als 12 μm beziehungsweise 0,012 mm. Andererseits ist es insbesondere aus wirtschaftlichen Gründen von Vorteil, wenn die Schicht dünner als 1 mm, insbesondere dünner als 0,5 mm, vorteilhafterweise dünner als 0,1 mm ist.

Unter dem Begriff Bohrung ist im Folgenden ein Loch zu verstehen, das nicht zwingend rund ausgestaltet sein muss. Insbesondere kann die Bohrung hier auch eckig oder elliptisch ausgestaltet sein und beispielsweise durch einen Stanz- oder Fräsprozess hergestellt worden sein.

Das Skalenelement dient in einer Winkelmesseinrichtung dazu, dass eine Winkelstellung relativ zu einem Abtastelement bestimmt werden kann. Dabei ist das Skalenelement relativ zum Abtastelement um eine Achse drehbar angeordnet, so dass die Messrichtung die Umfangsrichtung bezogen auf die Achse darstellt.

Vorteilhafterweise ist auch in einem nichtleitfähigen Teilungsbereich eine weitere Bohrung im Substrat angeordnet.

Mit Vorteil weist die Teilungsspur n elektrisch leitfähige Teilungsbereiche auf und im Substrat sind m Bohrungen angeordnet, mit $n \neq m$. Insbesondere kann das Skalenelement so ausgestaltet sein, dass die Beziehung $n < m$ gilt.

Insbesondere kann n eine ungerade Zahl und m eine gerade Zahl sein.

In weiterer Ausgestaltung der Erfindung ist zumindest ein elektrisch leitfähiger Teilungsbereich in Umfangsrichtung mit einer konvexen Kontur begrenzt. Das heißt, dass in Umfangsrichtung gegenüberliegende elektrisch leitfähige Teilungsbereiche in den gegenüber liegenden Abschnitten durch eine konvexe Kontur begrenzt sind. Insbesondere kann diese Kontur rund sein und insbesondere ein Kreislinienabschnitt sein. Im Gegensatz zu elektrisch leitfähigen Teilungsbereichen bei herkömmlichen induktiven Skalenelementen liegt hier also keine durchgehend geradlinige in radialer Richtung verlaufende Kontur vor. Alternativ zu der genannten runden Kontur kann auch eine polygonartige Kontur gewählt werden, z.B. in Form eines halben Sechseckes. Ebenso kann die Kontur auch konkav ausgestaltet sein.

Mit Vorteil ist die Teilungsspur ringförmig beziehungsweise kreisringförmig ausgebildet, wobei insbesondere der Mittelpunkt der ringförmigen Teilungsspur auf der Achse liegt.

Das Skalenelement kann so ausgestaltet sein, dass dieses in mehreren elektrisch leitfähigen Teilungsbereichen jeweils eine Öffnung aufweist und / oder zumindest ein elektrisch leitfähiger Teilungsbereich mehrere Öffnungen aufweist. Insbesondere können alle elektrisch leitfähigen Teilungsbereiche des Skalenelements mehrere Öffnungen aufweisen.

Mit Vorteil sind alle elektrisch leitfähigen Teilungsbereiche geometrisch identisch ausgestaltet.

In weiterer Ausgestaltung der Erfindung sind zumindest ein Teil der Öffnungen in den elektrisch leitfähigen Teilungsbereichen geometrisch gleich ausgestaltet.

Vorteilhafterweise erstreckt sich die Teilungsspur entlang einer Teilungskreislinie mit dem Mittelpunkt, der insbesondere auf der Achse liegt, wobei die Öffnungen so angeordnet sind, dass diese jeweils den gleichen Abstand zum Mittelpunkt aufweisen und entlang der Teilungskreislinie äquidistant angeordnet sind.

Mit Vorteil umfasst das Skalenelement mehrere elektrisch leitfähige Teilungsbereiche, welche Bohrungen aufweisen. Die Bohrungen sind so angeordnet, dass diese jeweils den gleichen Abstand zum Mittelpunkt aufweisen und entlang der Teilungskreislinie äquidistant angeordnet sind.

Die Abstände zwischen den Öffnungen beziehungsweise zwischen den Bohrungen werden hier in Grad angegeben und beziehen sich auf einen jeweiligen Zentriwinkel um die Achse beziehungsweise um den Mittelpunkt der Teilungskreislinie.

In weiterer Ausgestaltung der Erfindung umfasst das Skalenelement zumindest ein Befestigungselement, das in der Bohrung angeordnet ist. Dabei kann das Befestigungselement bezogen auf die axiale Richtung bündig oder zurückgesetzt bezüglich der elektrisch leitfähigen Teilungsbereiche angeordnet sein und jedenfalls nicht in axialer Richtung über die Oberfläche der elektrisch leitfähigen Teilungsbereiche ragen. Unter axialer Richtung ist im Folgenden eine Richtung zu verstehen, die parallel zur Achse orientiert ist.

Insbesondere ist das Befestigungselement aus elektrisch leitfähigem Material hergestellt und kann als eine Schraube ausgestaltet sein. Alternativ kann als Befestigungselement ein Niet, ein Metallstift, ein Spannstift oder dergleichen dienen, wobei es vorteilhaft sein kann, wenn das Skalenelement zusätzlich noch an dem Maschinenteil, an dem es befestigt wird, verklebt wird. Das Befestigungselement kann insbesondere zur Herstellung eines Formschlusses dienen, was für eine funktional sichere Anordnung von Bedeutung ist. Gleichzeitig kann das Befestigungselement zur Zentrierung des Skalenelements dienen. So ist beispielsweise auch eine Konfiguration möglich, bei der in die Bohrungen Zentriernasen beziehungsweise Zentrierschneiden gepresst werden und das Skalenelement zusätzlich mit einer Klebeverbindung fixiert wird.

Mit Vorteil umfasst das Skalenelement mehrere Befestigungselemente, wobei das Skalenelement mehrere der elektrisch leitfähigen Teilungsbereiche umfasst, welche Bohrungen aufweisen, in denen die Befestigungselemente angeordnet sind.

In weiterer Ausgestaltung der Erfindung weist die Teilungsspur n elektrisch leitfähige Teilungsbereiche auf und das Skalenelement umfasst p Befestigungselemente, die in den Bohrungen angeordnet sind. Dabei gilt folgende Bedingung: n ≠ p. Insbesondere kann folgendes gelten: n < p, wobei es vorteilhaft sein kann, wenn n eine ungerade Zahl und p eine gerade Zahl ist.

Gemäß einem weiteren Aspekt umfasst die Erfindung auch eine induktive Winkelmesseinrichtung mit dem Skalenelement und mit einem Abtastelement.

Vorteilhafte Ausbildungen der Erfindung entnimmt man den abhängigen Ansprüchen.

Weitere Einzelheiten und Vorteile des erfindungsgemäßen Abtastelements ergeben sich aus der nachfolgenden Beschreibung eines Ausführungsbeispiels anhand der beiliegenden Figuren.

KURZE BESCHREIBUNG DER ZEICHNUNGEN

Figur 1      eine Draufsicht auf eine Seite eines Skalenelements,

Figur 2      eine perspektivische Schnittdarstellung des Skalenelements,

Figur 3      eine Schnittdarstellung durch eine Bohrung des Skalenelements,

Figur 4      eine Draufsicht auf eine Seite des Abtastelements.

**BESCHREIBUNG DER AUSFÜHRUNGSFORMEN**

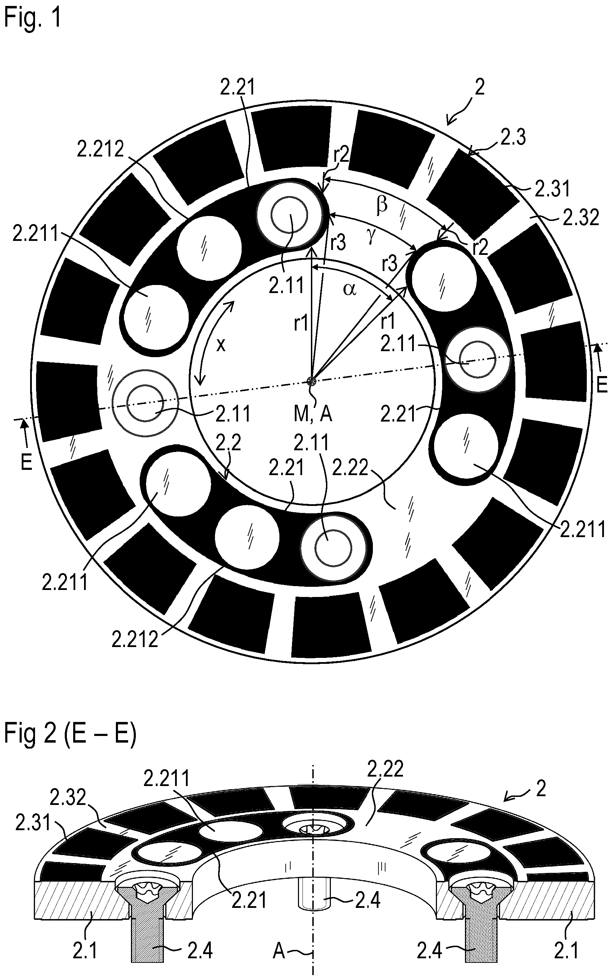

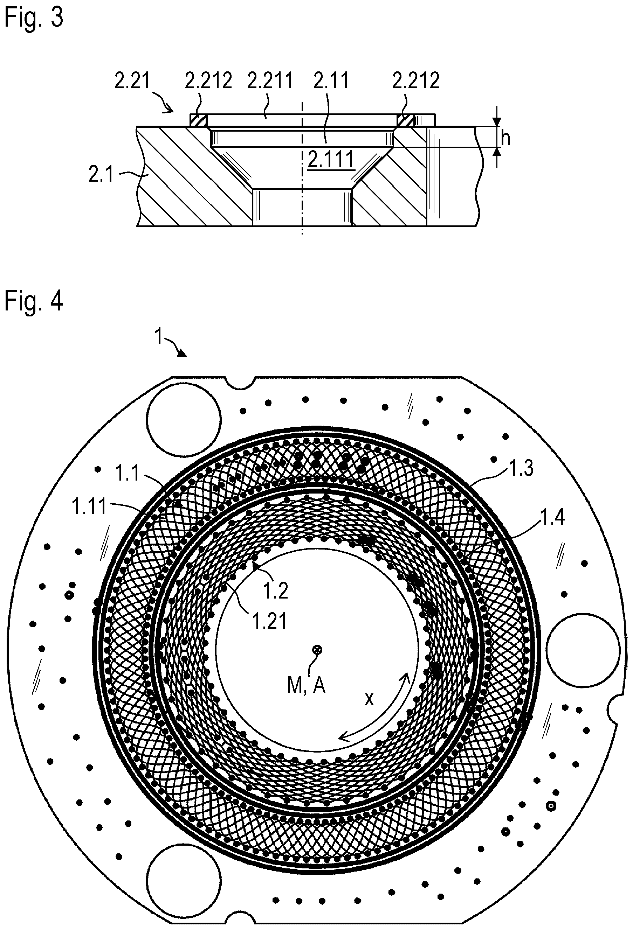

Die Erfindung wird im Zusammenhang mit einer Winkelmesseinrichtung beschrieben, welche ein Skalenelement 2 (Figuren 1, 2 und 3) und ein Abtastelement 1 (Figur 4) aufweist, das zur Erfassung einer Winkelstellung des Skalenelements 2 verwendet werden kann. Das Skalenelement 2 ist um eine Achse A relativ zum Abtastelement 1 drehbar angeordnet. Eine derartige Winkelmesseinrichtung kann beispielsweise in einer Antriebseinrichtung etwa in einem Roboter verwendet werden, wobei das Skalenelement 2 dann etwa mit einer Antriebswelle eines Motors drehfest verbunden wird.

Das Abtastelement 1 gemäß der Figur 4 dient zur Abtastung des Skalenelements 2 und ist als eine Leiterplatte ausgestaltet, welche mehrere Lagen sowie elektronische Bauteile aufweist, Im vorgestellten Ausführungsbeispiel sind die elektronischen Bauteile nur auf einer Seite der Leiterplatte montiert, nämlich auf der vom Skalenelement 2 abgewandten Seite und daher in der Figur 4 nicht sichtbar. Alternativ oder ergänzend könnten aber auch beide Seiten der Leiterplatte mit elektronischen Bauteilen bestückt werden.

Zur Bestimmung der Winkelinformationen weist das Abtastelement 1 eine erste Empfängerspur 1.1 und eine zweite Empfängerspur 1.2 auf. Die Empfängerspuren 1.1, 1.2 haben jeweils eine Ringform, wobei für beide Empfängerspuren 1.1, 1.2 gilt, dass deren Mittelpunkt M auf der Achse A liegt. Demnach sind die Empfängerspuren 1.1, 1.2 bezüglich des Mittelpunkts M in erster Näherung konzentrisch angeordnet.

Die erste Empfängerspur 1.1 umfasst im vorgestellten Ausführungsbeispiel vier Empfängerleiterbahnen 1.11. Die Empfängerleiterbahnen 1.11 der ersten Empfängerspur 1.1 sind in Umfangsrichtung x versetzt zueinander angeordnet und weisen einen räumlich periodischen Verlauf auf, der im Wesentlichen sinusförmig beziehungsweise sinusartig ausgestaltet ist.

Die zweite Empfängerspur 1.2 umfasst im vorgestellten Ausführungsbeispiel acht Empfängerleiterbahnen 1.21, die in Umfangsrichtung x versetzt relativ zueinander angeordnet sind.

Außerdem umfasst das Abtastelement 1 eine erste Erregerspur 1.3 und eine zweite Erregerspur 1.4. Die Erregerspuren 1.3, 1.4 umfassen im vorgestellten Ausführungsbeispiel mehrere Erregerleitungen, können aber auch nur als jeweils eine Erregerleitung ausgebildet sein. Die erste Empfängerspur 1.1 verläuft radial innerhalb der ersten Erregerspur 1.3 und radial außerhalb der zweiten Erregerspur 1.4. Die zweite Erregerspur 1.4 verläuft zudem radial außerhalb der zweiten Empfängerspur 1.2. Sowohl die Erregerspuren 1.3, 1.4 als auch die Empfängerspuren 1.1, 1.2 verlaufen entlang der Umfangsrichtung x.

Die Empfängerleiterbahnen 1.11 der ersten Empfängerspur 1.1, wie auch die Empfängerleiterbahnen 1.21 der zweiten Empfängerspur 1.2, verlaufen mit Vias verbunden in unterschiedlichen Lagen der Leiterplatte, so dass an Kreuzungspunkten unerwünschte Kurzschlüsse vermieden werden. Wenngleich genau genommen jede der Empfängerleiterbahnen 1.11, 1.21 aus vielen Leiterstücken besteht, die jeweils auf zwei Ebenen beziehungsweise Lagen verteilt und aneinandergereiht sind, wird hier eine derartige Struktur zusammenfassend als eine Empfängerleiterbahn 1.11, 1.21 bezeichnet.

In der Figur 1 ist das Skalenelement 2 in einer Draufsicht gezeigt, wobei das Skalenelement 2 in der Figur 1 im Vergleich zum Abtastelement 1 der Figur 4 vergrößert dargestellt ist. Das Skalenelement 2 weist eine ringförmige beziehungsweise kreisringförmige Gestalt auf. Das Skalenelement 2 umfasst ein Substrat 2.1 (Figur 2), auf dem zwei Teilungsspuren 2.2, 2.3 angeordnet sind. Im dargestellten Ausführungsbeispiel ist das Substrat 2.1 aus Leiterplattenmaterial hergestellt, das Kunststoff, insbesondere Epoxidharz, umfasst. Die Teilungsspuren 2.2, 2.3 sind ringförmig ausgebildet und bezüglich der Achse A konzentrisch mit unterschiedlichen Radien auf dem Substrat 2.1 angeordnet. Die Teilungsspuren 2.2, 2.3 umfassen Teilungsstrukturen bestehend aus jeweils einer periodischen Abfolge von entlang der Umfangsrichtung x alternierend angeordneten elektrisch leitfähigen Teilungsbereichen 2.21, 2.31 und nichtleitfähigen Teilungsbereichen 2.22, 2.32, wobei die elektrisch leitfähigen Teilungsbereiche 2.21, 2.31, jeweils aus einer Schicht aus elektrisch leitfähigem Material gebildet sind. Die Dicke dieser Schicht beträgt hier 18 $\mu$m. Als Material für die elektrisch leitfähigen Teilungsbereiche 2.21, 2.31 wurde im gezeigten Beispiel Kupfer auf das Substrat 2.1 aufgebracht. In den nichtleitfähigen Teilungsbereichen 2.22, 2.32 ist das Substrat 2.1 dagegen nicht beschichtet. Durch die Anordnung mit jeweils zwei Teilungsspuren 2.2, 2.3 kann die Winkelstellung des Skalenelements 2 absolut bestimmt werden. Die zweite (äußere) Teilungsspur 2.3 des Skalenelements 2 weist die größere Anzahl von jeweiligen Teilungsbereichen 2.31, 2.32 entlang der Umfangsrichtung x auf, so dass durch diese die größere Auflösung bezüglich der Messung der Winkelstellung erzielbar ist.

Die elektrisch leitfähigen Teilungsbereiche 2.21 der ersten (inneren) Teilungsspur 2.2 weisen Öffnungen 2.211 auf, so dass also die Schicht aus elektrisch leitendem Material an diesen Stellen geöffnet ist, beziehungsweise das Substrat 2.1 in diesen Bereichen nicht beschichtet ist. Im vorgestellten Ausführungsbeispiel weisen die Öffnungen 2.211 jeweils eine kreisförmige Geometrie auf. Die Öffnungen 2.211 sind so angeordnet, dass diese jeweils den gleichen Abstand zum Mittelpunkt M aufweisen. Insbesondere sind die Schwerpunkte bzw. die Mittelpunkte der Öffnungen 2.211 mit jeweils dem gleichen Abstand zum Mittelpunkt M angeordnet.

Die elektrisch leitfähigen Teilungsbereiche 2.21 sind so ausgestaltet beziehungsweise angeordnet, dass jede Öffnung 2.211 von dem elektrisch leitfähigen Teilungsbereich 2.21 umschlossen ist, so dass sich beidseitig um die Öffnung 2.211 herum Stege 2.212 aus elektrisch leitfähigem Material befinden und um die Öffnung 2.211 herum eine geschlossene Kontur aus elektrisch leitfähigem Material vorliegt. Dabei sind zwei in Umfangsrichtung x benachbarte elektrisch leitfähige Teilungsbereiche 2.21 so ausgestaltet, dass entlang der radialen Richtung winkelbezogene erste, zweite und dritte Abstände $\alpha$, $\beta$, $\gamma$ in Umfangsrichtung x zwischen deren leitfähigen Schichten unterschiedlich groß sind. Somit ist beispielsweise der erste winkelbezogene Abstand $\alpha$ bei einer ersten Distanz r1 zur Achse A (radiale Distanz) definiert und der zweite winkelbezogene Abstand $\beta$ bei einer zweiten radialen Distanz r2. Dabei gilt folgender Zusammenhang:

$$r1 \neq r2 \text{ und } \alpha \neq \beta.$$

Insbesondere ist der dritte Abstand $\gamma$, der mit einer dritten radialen Distanz r3 radial mittig in der ersten Teilungsspur 2.2 liegt, kleiner als der erste Abstand $\alpha$, der radial weiter innen liegt und auch kleiner als der zweite Abstand $\beta$, der relativ zum dritten Abstand $\gamma$ radial außen liegt. Demnach sind also der erste Abstand $\alpha$ und der zweite Abstand $\beta$ größer als der radial zwischen dem ersten und dem zweiten Abstand $\alpha$, $\beta$ liegende dritte Abstand $\gamma$. Es kann also festgestellt werden, dass die winkelbezogenen Abstände $\alpha$, $\beta$, $\gamma$ in Umfangsrichtung x abhängig von der radialen Position bzw. radialen Distanz r1, r2, r3 unterschiedlich groß sind.

Im vorgestellten Ausführungsbeispiel weisen die elektrisch leitfähigen Teilungsbereiche 2.21 jeweils eine Form auf, die in Umfangsrichtung x mit einer runden Kontur begrenzt ist, wobei die elektrisch leitfähigen Teilungsbereiche 2.21 in diesen Bereichen eine konvexe Kontur aufweisen.

In den elektrisch leitfähigen Teilungsbereichen 2.21 sind jeweils durch eine Öffnung 2.211 hindurch Bohrungen 2.11 im Substrat 2.1 angeordnet. Die Bohrungen 2.11 sind also entlang der ersten (inneren) Teilungsspur 2.2 im Substrat 2.1 angeordnet, im vorgestellten Ausführungsbeispiel sind vier Bohrungen 2.11 vorgesehen, die jeweils den gleichen Abstand zum Mittelpunkt M aufweisen und entlang der Umfangsrichtung x (hier in einem Abstand von 90°) angeordnet sind. Dabei sind drei Bohrungen 2.11 innerhalb der elektrisch leitfähigen Teilungsbereiche 2.21 und eine Bohrung 2.11 innerhalb eines nichtleitfähigen Teilungsbereichs 2.22.

Im vorgestellten Ausführungsbeispiel weist die erste Teilungsspur 2.2 drei elektrisch leitfähige Teilungsbereiche 2.21 auf (n = 3). Das Skalenelement 2 umfasst vier Bohrungen 2.11 im Substrat 2.1 zur Befestigung des Skalenelements an einem Maschinenteil (m = 4). Demnach gilt hier, dass sich die Anzahl n der elektrisch leitfähigen Teilungsbereiche 2.21 von der Anzahl m der Bohrungen 2.11 unterscheidet (n ≠ m). Insbesondere ist hier die Anzahl n der elektrisch leitfähigen Teilungsbereiche 2.21 kleiner als die Anzahl m der Bohrungen 2.11 im Substrat 2.1 (n < m). Im vorgestellten Ausführungsbeispiel entspricht die Anzahl n der elektrisch leitfähigen Teilungsbereiche 2.21 einer ungeraden Zahl und die Anzahl m der Bohrungen 2.11 einer geraden Zahl.

In der Figur 2 ist ein perspektivischer Schnitt entlang einer Linie E - E (Figur 1) durch das Skalenelement 2 gezeigt, wobei dort in die Bohrungen 2.11 eingelegte Befestigungselemente 2.4, hier Schrauben, mitabgebildet sind. Insgesamt weist wie oben beschrieben die Teilungsspur 2.2 drei elektrisch leitfähige Teilungsbereiche 2.21 auf (n = 3). Zudem umfasst das Skalenelement 2 vier Befestigungselemente 2.4 (p = 4). Demnach gilt hier, dass sich die Anzahl n der elektrisch leitfähigen Teilungsbereiche 2.21 von der Anzahl p der Befestigungselemente 2.4 unterscheidet (n ≠ p). Insbesondere ist hier die Anzahl n der elektrisch leitfähigen Teilungsbereiche 2.21 kleiner als die Anzahl p der Befestigungselemente 2.4 (n < p). Im vorgestellten Ausführungsbeispiel entspricht die Anzahl n der elektrisch leitfähigen Teilungsbereiche 2.21 einer ungeraden Zahl und die Anzahl p der Bohrungen 2.11 einer geraden Zahl.

In der Figur 3 ist ein Detailschnitt durch einen Teil des Skalenelementes 2 im Bereich der ersten Teilungsspur 2.2 gezeigt, wobei in der Figur 3 die Dicke der Schicht aus elektrisch leitendem Material des elektrisch leitfähigen Teilungsbereichs 2.21 zur Erläuterung übertrieben groß dargestellt ist. Die Bohrung 2.11 ist hier jeweils als eine abgesetzte Durchgangsbohrung ausgestaltet. Insbesondere weist die Bohrung 2.11 einen konischen Bereich 2.111 auf, der beispielsweise durch eine Senkbearbeitung hergestellt wird. Der konische Bereich 2.111 ist bezüglich der Oberfläche des Substrats 2.1 beziehungsweise in axialer Richtung um ein Maß h zurückversetzt angeordnet. Dadurch kann in der jeweiligen Bohrung 2.11 ein Befestigungselement 2.4 angeordnet werden, das hier jeweils insbesondere als eine Senkkopfschraube ausgebildet ist, wobei das Befestigungselement 2.4 bezüglich der Oberfläche des Substrats 2.1 und bezüglich der Oberfläche des jeweiligen elektrisch leitfähigen Teilungsbereichs 2.21 zurückversetzt ist. Das Befestigungselement 2.4 dient zur Befestigung des Skalenelements 2 an einem Maschinenteil und ist hier aus Stahl gefertigt und demnach elektrisch leitend.

Im zusammengebauten Zustand stehen sich das Abtastelement 1 und das Skalenelement 2 mit axialem Abstand beziehungsweise Luftspalt gegenüber, so dass bei einer Relativdrehung zwischen dem Skalenelement 2 und dem Abtastelement 1 in den Empfängerleiterbahnen 1.11, 1.21 jeweils ein von der jeweiligen Winkelposition abhängiges Signal durch Induktionseffekte erzeugbar ist. Voraussetzung für die Bildung von entsprechenden Signalen ist, dass die Erregerspuren 1.3, 1.4 ein zeitlich wechselndes elektromagnetisches Erregerfeld im Bereich der jeweilig abgetasteten Teilungsstrukturen erzeugen. Im dargestellten Ausführungsbeispiel sind die Erregerspuren 1.3, 1.4 als mehrere planar-parallele stromdurchflossene Einzel-Leiterbahnen ausgebildet.

Werden die Erregerspuren 1.3, 1.4 bestromt, so bildet sich um die Erregerspuren 1.3, 1.4 ein schlauch- bzw. zylinderförmig orientiertes elektromagnetisches Feld aus. Die Feldlinien des resultierenden elektromagnetischen Feldes verlaufen um die Erregerspuren 1.3, 1.4, wobei die Richtung der Feldlinien in bekannter Art und Weise von der Stromrichtung in den Erregerspuren 1.3, 1.4 abhängt. Im Bereich der elektrisch leitfähigen Teilungsbereiche 2.21, 2.31 werden Wirbelströme induziert, so dass jeweils eine von der Winkelstellung abhängige Modulation des Feldes erreicht wird. Entsprechend kann durch die Empfängerspuren 1.1, 1.2 jeweils die relative Winkelstellung gemessen werden.

Das Abtastelement 1 weist eine elektronische Schaltung mit elektronischen Bauteilen auf, die miteinander elektrisch verbunden sind. Die elektronische Schaltung kann beispielsweise einen ASIC-Baustein umfassen. Die Signale, die von den Empfängerspuren 1.1, 1.2 erzeugt werden, werden mit Hilfe von einigen der elektronischen Bauteile, die eine Auswerteschaltung bilden, weiterverarbeitet. Insbesondere kann bei der vorliegenden Konfiguration mit den beiden Teilungsspuren 2.1, 2.2 und den beiden Empfängerspuren 1.1, 1.2 durch den Auswerte-ASIC eine absolute Position errechnet werden. Die elektronische Schaltung des Abtastelements 1 arbeitet nicht nur als Auswerteelement, sondern auch als Erregerkontrollelement, unter dessen Kontrolle der Erregerstrom generiert beziehungsweise erzeugt wird, welcher dann durch die Erregerspuren 1.3, 1.4 fließt. Somit werden die Erregerspuren 1.3, 1.4 durch ein und dasselbe Erregerkontrollelement bestromt.

Die erste Empfängerspur 1.1 ist radial außen von der ersten Erregerspur 1.3 umgeben und gleichzeitig radial innen von der zweiten Erregerspur 1.4 umgeben. Im Gegensatz dazu ist die zweite Empfängerspur 1.2 nur einseitig von der zweiten Erregerspur 1.4 umgeben. Durch das bezüglich der zweiten Empfängerspur 1.2 einseitige Aufprägen des Erregerfelds kann eine äußerst platzsparende Konfiguration des Abtastelements 1 erreicht werden.

Die spezielle Ausgestaltung der ersten elektrisch leitfähigen Teilungsbereiche 2.21, insbesondere die Positionierung und Dimensionierung der Öffnungen 2.211 stellt eine geeignete Ausbildung der Wirbelströme sicher, die um die Öffnung 2.211 über 360° herum insbesondere in den Stegen 2.212 aus elektrisch leitfähigem Material fließen können.

Bei der herkömmlichen Ausgestaltung der elektrisch leitfähigen Teilungsbereiche 2.21, wie sie im Stand der Technik offenbart ist, sind zwei in Umfangsrichtung x benachbarte elektrisch leitfähige Teilungsbereiche 2.21 so ausgestaltet, dass entlang der radialen Richtung winkelbezogene Abstände zwischen deren leitfähigen Schichten gleich groß sind. Dieser Sachverhalt liegt vor, weil insbesondere die elektrisch leitfähigen Teilungsbereiche 2.21 in Umfangsrichtung x mit jeweils einer Kontur begrenzt sind, die geradlinig in radialer Richtung verläuft.

In Verbindung mit der Ausgestaltung des Skalenelements 2 mit Bohrungen 2.11 hat es sich bezüglich der erreichten Signalqualität und damit im Hinblick auf die erreichbare Messgenauigkeit als besonders vorteilhaft herausgestellt, wenn das Skalenelement, insbesondere die elektrisch leitfähigen Teilungsbereiche 2.21, erfindungsgemäß ausgestaltet sind.

## Patentansprüche

1. Skalenelement (2) für eine induktive Winkelmesseinrichtung, welches ein Substrat (2.1) aufweist, auf dem eine Teilungsspur (2.2) angeordnet ist, wobei

    die Teilungsspur (2.2) entlang der Umfangsrichtung (x) aus einer periodischen Abfolge von alternierend angeordneten elektrisch leitfähigen Teilungsbereichen (2.21) und nichtleitfähigen Teilungsbereichen (2.22) gebildet ist, wobei die elektrisch leitfähigen Teilungsbereiche (2.21), jeweils aus einer Schicht aus elektrisch leitfähigem Material gebildet sind, die sich entlang der Umfangsrichtung (x) und der radialen Richtung erstreckt, wobei

    im Substrat (2.1) zumindest eine Bohrung (2.11) angeordnet ist zur Befestigung des Skalenelements (2) an einem Maschinenteil, wobei

zumindest ein elektrisch leitfähiger Teilungsbereich (2.21) eine Öffnung (2.211) aufweist, wobei das elektrisch leitfähige Material die Öffnung (2.211) umschließt, wobei

in dem zumindest einen elektrisch leitfähigen Teilungsbereich (2.21) durch die Öffnung (2.211) hindurch die zumindest eine Bohrung (2.11) im Substrat (2.1) angeordnet ist,

**dadurch gekennzeichnet, dass**
zwei in Umfangsrichtung (x) benachbarte elektrisch leitfähige Teilungsbereiche (2.21) so ausgestaltet sind, dass entlang der radialen Richtung winkelbezogene Abstände ($\alpha$, $\beta$, $\gamma$) zwischen deren leitfähigen Schichten unterschiedlich groß sind.

2. Skalenelement (2) gemäß dem Anspruch 1, wobei in einem nichtleitfähigen Teilungsbereich (2.22) eine weitere Bohrung (2.11) im Substrat (2.1) angeordnet ist.

3. Skalenelement (2) gemäß einem der vorhergehenden Ansprüche, wobei die Teilungsspur (2.2) n elektrisch leitfähige Teilungsbereiche (2.21) aufweist und im Substrat (2.1) m Bohrungen (2.11) angeordnet sind, wobei gilt: $n \neq m$.

4. Skalenelement (2) gemäß einem der vorhergehenden Ansprüche, wobei gilt $n < m$.

5. Skalenelement (2) gemäß einem der vorhergehenden Ansprüche, wobei n eine ungerade Zahl und m eine gerade Zahl ist.

6. Skalenelement (2) gemäß einem der vorhergehenden Ansprüche, wobei ein erster Abstand ($\alpha$) und ein zweiter Abstand ($\beta$) größer sind als ein radial zwischen dem ersten und dem zweiten Abstand ($\alpha$, $\beta$) liegender dritter Abstand ($\gamma$).

7. Skalenelement (2) gemäß einem der vorhergehenden Ansprüche, wobei zumindest ein elektrisch leitfähiger Teilungsbereich (2.21) in Umfangsrichtung (x) mit einer konvexen Kontur begrenzt ist.

8. Skalenelement (2) gemäß einem der vorhergehenden Ansprüche, wobei zumindest ein elektrisch leitfähiger Teilungsbereich (2.21) in Umfangsrichtung (x) mit einer runden Kontur begrenzt ist.

9. Skalenelement (2) gemäß einem der vorhergehenden Ansprüche, wobei die Teilungsspur (2.2) n elektrisch leitfähige Teilungsbereiche (2.21) aufweist und das Skalenelement (2) p Befestigungselemente (2.4) umfasst, die in den Bohrungen (2.11) angeordnet sind, wobei gilt $n \neq p$.

10. Skalenelement (2) gemäß dem Anspruch 9, wobei gilt $n < p$.

11. Skalenelement (2) gemäß den Ansprüchen 9 oder 10, wobei n eine ungerade Zahl und p eine gerade Zahl ist.

Fig. 1

Fig 2 (E – E)

Fig. 3

Fig. 4

Europäisches Patentamt
European Patent Office
Office européen des brevets

# EUROPÄISCHER RECHERCHENBERICHT

Nummer der Anmeldung

EP 24 21 1950

## EINSCHLÄGIGE DOKUMENTE

| Kategorie | Kennzeichnung des Dokuments mit Angabe, soweit erforderlich, der maßgeblichen Teile | Betrifft Anspruch | KLASSIFIKATION DER ANMELDUNG (IPC) |
|---|---|---|---|
| Y | EP 4 421 454 A1 (HEIDENHAIN GMBH DR JOHANNES [DE]) 28. August 2024 (2024-08-28) * Zusammenfassung, Beschr. [0001], [0058]-[0063], Figuren 4-6 * ----- | 1-11 | INV. G01D5/20 G01D5/244 G01D5/245 |
| Y | EP 3 667 229 B1 (UNIV CHONGQING TECHNOLOGY [CN]) 1. September 2021 (2021-09-01) * Zusammenfassung, Beschr. [0001], [0013], [0022], Figur 1 * ----- | 1-11 | |
| A | EP 4 086 586 A1 (VISHAY MCB IND S A S [FR]) 9. November 2022 (2022-11-09) * Zusammenfassung, Beschr. [0043]-[0048], Fig. 1 * ----- | 1-11 | |
| A | US 2024/271965 A1 (KIM JAESUNG [CA] ET AL) 15. August 2024 (2024-08-15) * Zusammenfassung, Beschr. [0057]-[0058], Figur 1 * ----- | 1-11 | |

RECHERCHIERTE SACHGEBIETE (IPC)

G01D

Der vorliegende Recherchenbericht wurde für alle Patentansprüche erstellt

| Recherchenort | Abschlußdatum der Recherche | Prüfer |
|---|---|---|
| München | 3. April 2025 | Reim, Klaus |

**EP 4 741 772 A1**

## ANHANG ZUM EUROPÄISCHEN RECHERCHENBERICHT
## ÜBER DIE EUROPÄISCHE PATENTANMELDUNG NR.

EP 24 21 1950

In diesem Anhang sind die Mitglieder der Patentfamilien der im obengenannten europäischen Recherchenbericht angeführten Patentdokumente angegeben.
Die Angaben über die Familienmitglieder entsprechen dem Stand der Datei des Europäischen Patentamts am
Diese Angaben dienen nur zur Unterrichtung und erfolgen ohne Gewähr.

03-04-2025

| Im Recherchenbericht angeführtes Patentdokument | | Datum der Veröffentlichung | Mitglied(er) der Patentfamilie | | Datum der Veröffentlichung |
|---|---|---|---|---|---|
| EP 4421454 | A1 | 28-08-2024 | CN | 118533051 A | 23-08-2024 |
| | | | DE | 102024000091 A1 | 29-08-2024 |
| | | | EP | 4421454 A1 | 28-08-2024 |
| | | | JP | 2024120170 A | 04-09-2024 |
| | | | US | 2024288258 A1 | 29-08-2024 |
| EP 3667229 | B1 | 01-09-2021 | CN | 109211092 A | 15-01-2019 |
| | | | EP | 3667229 A1 | 17-06-2020 |
| | | | GB | 2579311 A | 17-06-2020 |
| | | | JP | 6821288 B2 | 27-01-2021 |
| | | | JP | 2020532746 A | 12-11-2020 |
| | | | WO | 2019114583 A1 | 20-06-2019 |
| EP 4086586 | A1 | 09-11-2022 | EP | 4086586 A1 | 09-11-2022 |
| | | | IL | 292711 A | 01-12-2022 |
| | | | KR | 20220152588 A | 16-11-2022 |
| | | | US | 2022349696 A1 | 03-11-2022 |
| US 2024271965 | A1 | 15-08-2024 | US | 2024271965 A1 | 15-08-2024 |
| | | | WO | 2024173504 A1 | 22-08-2024 |

EPO FORM P0461

Für nähere Einzelheiten zu diesem Anhang : siehe Amtsblatt des Europäischen Patentamts, Nr.12/82

**IN DER BESCHREIBUNG AUFGEFÜHRTE DOKUMENTE**

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

**In der Beschreibung aufgeführte Patentdokumente**

- EP 4421454 A1